# EUROPEAN PATENT APPLICATION

(11) **EP 1 773 079 A1**
(43) Date of publication of application: **11.04.2007**
(21) Application number: 05292092.3
(22) Date of filing: 07.10.2005
(51) Int. Cl.: H04Q 7/32

(54) **Device and method for providing a multiple access to a SIM card in a mobile terminal**

(71) Applicant: LG Electronics, Inc., Seoul (KR)
(72) Inventor: Deprun, Jean-François, 75010 Paris (FR)
(74) Representative: Bentz, Jean-Paul

(57) **Abstract**

The invention concerns a mobile terminal comprising a smart card (10), at least a first and a second processors (20, 30) able to communicate with said smart card (10).

The terminal of the invention comprises a smart card access manager (40) receiving first communication means (60) with the smart card from the first processor (20) and second communication means (70) with the smart card from the second processor (30), the smart card access manager including means (80) to selectively connect the communication means of the processors to the smart card, in order to provide a separate direct access to the smart card to each of the processors.

## Description

The present invention relates to a mobile terminal, and specifically to a device and a method for providing a multiple access to a SIM card mounted in a mobile terminal that uses SIM cards to store and access to information.

A Subscriber Identity Module (SIM) card is, in general, a smart card that is used in connection with mobile radiotelephone terminals that follow wireless communications standards, like GSM standard for example. SIM cards typically contain information relating to the subscriber, including a subscriber identifier allowing the subscriber to use any mobile terminal into which the SIM card is inserted.

With the development of mobile terminals, type smart phones, more and more functionalities and applications are available for terminal users, which lead to add more and more information in SIM cards. For example, SIM cards can store a phonebook identifying a stored bank of telephone numbers, voice messages, encryption sequences for secured data communications, game information and other information.

SIM cards have, to date, been associated with and used by one processor of the terminal, which is typically the communication processor used in the modem part of the terminal to operate the control of the communications with the GSM network or other telecommunication network. Now, the new generation of mobile terminals has often two processors. In particular, in addition to the communication processor, these terminals comprise one further processor, called application processor, which is used to operate the control of all applications proposed by a terminal. Such an application processor is notably in charge of the management of all user interfaces, such as the display device of the terminal, keypad, camera and other interfaces.

In a terminal fitted with two processors: one communication processor and one application processor, the SIM card is normally used by the two processors, for example by the communication processor to read or write information at the request of the network, and by the application processor, for example to access to the phone book or game information stored in the SIM card.

So, the application processor may also interact with and access information on a given SIM card, but such a processor typically access to the SIM card indirectly by going through the communication processor, as typically implemented in the current terminals. Indeed, as above explained, in the current mobile terminals, the SIM card is preferably connected to the communication processor.

This implementation is fine when the SIM request comes from/to the network, but when it comes from/to the application processor, the latter has to switch on the communication processor to access to the SIM card. If the modem part of the terminal is in sleep mode, that means that the application processor has first to wake up the communication processor to access and communicate with the SIM card. But the wake up process of the communication processor involved by the SIM access request from the application processor when the communication processor is in sleep mode, increases strongly the global consumption of the terminal.

Furthermore, sometimes, the user has to switch off the modem functionality of its terminal (in hospital, in airplane, etc.). In this case, it is not possible to him to access to the SIM card for example, to update its phonebook or play with games needing some information stored in SIM card, because the application processor needs to wake up the communication processor in charge of the modem part of the terminal.

Accordingly, there is a need for a device that allows each processor of a mobile terminal to directly interact with and access to information stored on a smart card housed in the mobile terminal without the need to wake up the other processor.

This objective is obtained by a mobile terminal comprising a smart card, at least a first and a second processors able to communicate with said smart card, said terminal being characterized in that it comprises a smart card access manager receiving first communication means with said smart card from said first processor and second communication means with said smart card from said second processor, said smart card access manager including means to selectively connect said communication means of said processors to said smart card, in order to provide a separate direct access to said smart card to each of said processors.

Advantageously, said separate direct access is mutually exclusive for said first and second processors.

According to a particular aspect of the invention, said smart card access manager comprises means to receive access request signals from said first processor and said second processor directed to said smart card, and to send to each of said processors an access state signal indicating if the access to the smart card is free or not for the corresponding processor.

According to an other aspect of the invention, said connection means of said smart card access manager selectively allow said communication means of one of said processors to connect to said smart card according to the state of said access request signals.

Preferably, said smart card comprises a SIM card.

Further, said first processor comprises means to operate the control of communications between said terminal and a telecommunication network.

Further, said second processor comprises means to operate the control of applications proposed by said terminal.

The present invention relates also to a method for providing a multiple access to a smart card housed in a mobile terminal comprising at least a first and a second processors able to communicate with said smart card, characterized in that it comprises the step of providing to each of said processors a separate direct access to said smart card.

Advantageously, said separate direct access is granted to only one of said processors at the same time.

According to one aspect of the invention, said method comprises the steps of:
receiving an access request to said smart card from one of said processors;
receiving a response from a smart card access manager directed to said processor, indicating if the access to said smart card is free or not, and
when the access is free, providing to said processor said separate direct access to said smart card through said smart card access manager.

Other features and advantages of the invention shall appear from the following description, as a non-limiting example, made with reference to the attached diagrams in which:
Figure 1 illustrates a smart card access management system according to the invention, and
Figure 2 illustrates in the form of timing diagrams the operation of a smart card access manager as represented in figure 1.

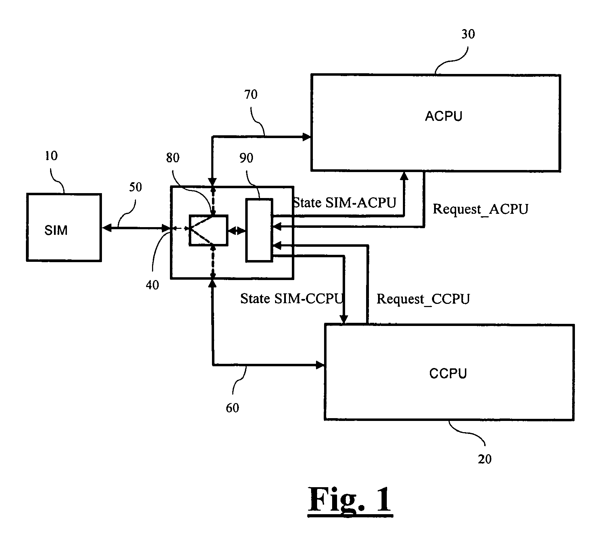

Figure 1 represents a system designed to manage the access to a smart card 10, typically a SIM card, between the two processors 20 and 30 of a mobile terminal, respectively the communication processor 20, called CCPU, and the application processor 30, called ACPU.

The SIM access management system includes a smart card access manager 40, in the form of a hardware block that is favourably designed to comprise standardized SIM interfaces with the SIM card in the one hand and with the CCPU and the ACPU in the other hand. According to the invention, the SIM access manager 40 comprises means 80 to selectively connect the SIM access bus 50, that is connected between the SIM card and the SIM access manager, to the SIM access CCPU bus 60, that is connected between the CCPU and the SIM access manager, or to the SIM access ACPU bus 70, that is connected between the ACPU and the SIM access manager. In this manner, the selective connection means 80 of the SIM access manager 40 provide a separate direct access to the SIM card to each of the processors CCPU and ACPU.

More particularly, for communication management purposes between the SIM card and the processors, with the above exposed feature of providing a separate direct access to the SIM card to each of the processors, the SIM access manager includes advantageously a control interface with the processor CCPU and a control interface with the processor ACPU.

The CCPU control interface comprises first and second communication links between the SIM access manager and the CCPU. The first communication link allows the SIM access manager 40 to receive an access request signal "Request_CCPU" from the CCPU, indicating if the CCPU wants to access to the SIM card. The second communication link allows the SIM access manager 40 to send an access state signal "State SIM-CCPU" to the CCPU, indicating to the CCPU if the SIM access is free or not and then, if the CCPU can begin to communicate with the SIM card through the SIM access CCPU bus 60.

In like manner, The ACPU control interface comprises first and second communication links between the SIM access manager and the ACPU. The first communication link allows the SIM access manager 40 to receive an access request signal "Request_ACPU" from the ACPU, indicating if the ACPU wants to access to the SIM card. The second communication link allows the SIM access manager 40 to send an access state signal "State SIM-ACPU" to the ACPU, indicating to the ACPU if the SIM access is free or not and then, if the ACPU can begin to communicate with the SIM card through the SIM access ACPU bus 70.

The "Request_xCPU" signals are controlled by the xCPU (ACPU or CCPU) to become active when the xCPU requests an access to communicate with the SIM card. The SIM access manager 40 comprises advantageously a state machine 90, cooperating with the connection means 80 of the SIM access manager, that defines the logical state of each of the "state SIM-xCPU" signals according to the access requests received from the processors, so as to indicate in which state are the connection means in the SIM access manager. In this manner, the connection means of the SIM access manager selectively allow the SIM access CCPU or ACPU bus to access to the SIM card according to the state of the access request signals received from the processors. Furthermore, the connection means of the SIM access manager favourably ensure that the access to the SIM card is mutually exclusive for the CCPU and ACPU.

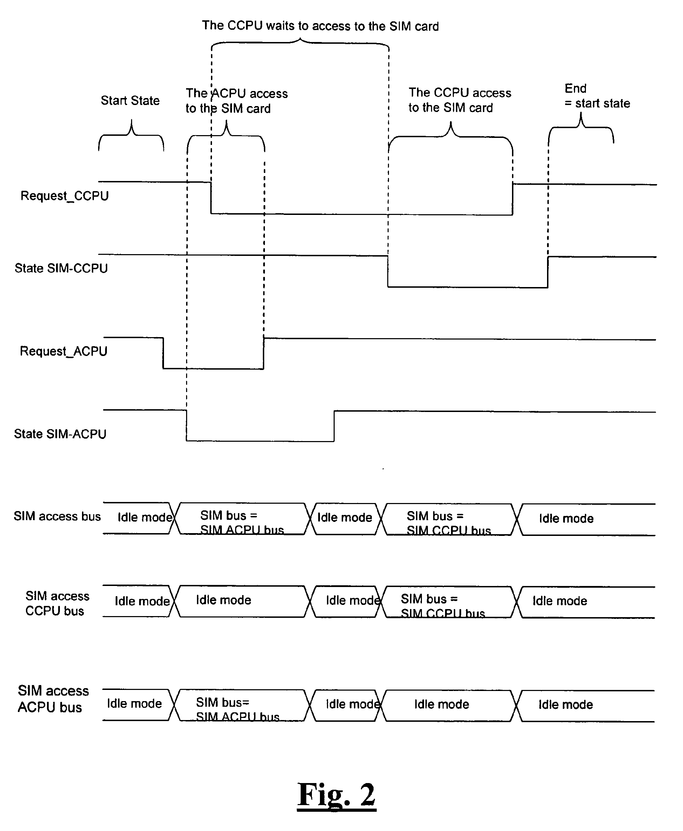

Figure 2 shows timing diagrams illustrating an embodiment of the present invention according to which the ACPU access to the SIM card and the CCPU waits to access to the SIM card.

In the start state, the access request signals and access state signals are in a first logical state, for example the high logical state. So, none of the processors wants to access to the SIM card, and the respective access state signals indicate to each of the corresponding processors that they have to wait before they communicate with the SIM card. In this configuration, the different SIM access bus are in idle mode.

When the ACPU wants to access to the SIM card, it activates the access request signal "Request_ACPU" by putting it in the low logical state. In this manner, the SIM access manager knows that the ACPU wants to access to the SIM card. The SIM access manager then verify the state of the access request signal "Request_CCPU" issued from the CCPU and, as this signal is high, indicating that the CCPU does not access to the SIM card at this time, it connects the SIM access bus to the SIM access ACPU bus through its selective connection means, allowing a direct access to the SIM card by the ACPU. Then the SIM access manager notifies the ACPU by pulling down the access state signal "State SIM-ACPU" sent to the ACPU, indicating to the ACPU that the access to the SIM card is free and allowing it to communicate with the SIM card. So, as soon as the signal "State SIM-ACPU" is low, the ACPU can communicate with the SIM card. While the ACPU communicates with the SIM card, the SIM access CCPU bus is in idle mode.

According to the example of figure 2, during the access to the SIM card by the ACPU, the SIM access manager receives an access request directed to the SIM card from the CCPU. Indeed, the CCPU notifies to the SIM access manager that it wants to access to the SIM card, by putting the access request signal "Request_CCPU" in the low logical state. But, when the SIM access manager receives the access request from the CCPU, the ACPU is already in communication with the SIM card. The SIM access manager then maintains the signal "State SIM-CCPU" in a high logical state, indicating that the CCPU has to wait before to access to the SIM card.

When the ACPU has finished communicating with the SIM card, it pulls up its request signal "Request_ACPU", indicating to the SIM access manager that it does not want access to the SIM card. So, the SIM access bus pass in idle mode and the signal "State SIM-ACPU" becomes high. The SIM access manager can now allow the CCPU to access to the SIM card as previously requested by this latter. The access request to the SIM card received from the CCPU during execution of the previously received access request from the ACPU is actually held until the previously received request is completed.

The SIM access manager then notifies the CCPU by pulling down the access state signal "State SIM-CCPU" sent to the ACPU, indicating to the CCPU that the access to the SIM card is now free and it connects the SIM access bus to the SIM access CCPU bus through its selective connection means, allowing a direct access to the SIM card by the CCPU. While the CCPU communicates with the SIM card, the SIM access ACPU bus is in idle mode. As previously described, when the CCPU has finished communicating with the SIM card, it pulls up its request signal "Request_CCPU".

So, with such a strategy, each processor CCPU and ACPU can access directly to the SIM card without the need of the other processor. Thanks to the SIM access manager, it becomes possible to allow the communication between the SIM card and one processor of the terminal without the need to wake up the other processor. Such a configuration is then particularly advantageous for the consumption of the terminal.

## Claims

1. Mobile terminal comprising a smart card (10), at least a first and a second processors (20, 30) able to communicate with said smart card (10), said terminal being **characterized in that** it comprises a smart card access manager (40) receiving first communication means (60) with said smart card from said first processor (20) and second communication means (70) with said smart card from said second processor (30), said smart card access manager including means (80) to selectively connect said communication means of said processors to said smart card, in order to provide a separate direct access to said smart card to each of said processors.

2. Mobile terminal according to claim 1, wherein said separate direct access is mutually exclusive for said first and second processors.

3. Mobile terminal according to claim 1 or 2, wherein said smart card access manager (40) comprises means to receive access request signals (Request_CCPU, Request_ACPU) from said first processor (20) and said second processor (30) directed to said smart card, and to send to each of said processors access state signals (State SIM-CCPU, State SIM-ACPU) indicating if the access to the smart card is free or not for the corresponding processor.

4. Mobile terminal according to claim 3, wherein said connection means (80) of said smart card access manager (40) selectively allow said communication means (60, 70) of one of said processors to connect to said smart card according to the state of said access request signals.

5. Mobile terminal according to anyone of the preceding claims wherein said smart card (10) comprises a SIM card.

6. Mobile terminal according to any one of the preceding claims wherein said first processor (20) comprises means to operate the control of communications between said terminal and a telecommunication network.

7. Mobile terminal according to any one of the preceding claims wherein said second processor (30) comprises means to operate the control of applications proposed by said terminal.

8. Method for providing a multiple access to a smart card (10) housed in a mobile terminal comprising at least a first (20) and a second (20) processors able to communicate with said smart card, **characterized in that** it comprises the step of providing to each of said processors a separate direct access to said smart card.

9. Method according to claim 8, wherein said separate direct access is granted to only one of said processors at the same time.

10. Method according to claim 8 or 9, wherein it comprises the steps of:
receiving an access request (Reqest_CCPU, Request ACPU) to said smart card from one of said processors;
receiving a response (State SIM-CCPU, State SIM-ACPU) from a smart card access manager (40) directed to said processor, indicating if the access to said smart card is free or not, and
when the access is free, providing to said processor said separate direct access to said smart card through said smart card access manager.
